## Europäisches Patentamt
## European Patent Office
## Office européen des brevets

(11) Veröffentlichungsnummer : **0 058 832**
**B1**

(12) **EUROPÄISCHE PATENTSCHRIFT**

(45) Veröffentlichungstag der Patentschrift :
16.04.86

(51) Int. Cl.⁴ : **C 25 B 11/04**

(21) Anmeldenummer : 82100543.6

(22) Anmeldetag : 27.01.82

(54) **Elektrode.**

(30) Priorität : 21.02.81 DE 3106587

(43) Veröffentlichungstag der Anmeldung :
01.09.82 Patentblatt 82/35

(45) Bekanntmachung des Hinweises auf die Patenterteilung : 16.04.86 Patentblatt 86/16

(84) Benannte Vertragsstaaten :
AT BE CH DE FR GB IT LI LU NL SE

(56) Entgegenhaltungen :
DE-A- 2 346 055
FR-A- 2 120 796
FR-A- 2 259 921
FR-A- 2 322 939
US-A- 3 992 278
US-A- 4 138 510
Deden, 1979, Bioblographisches Institut Mann-
heim/Wien/Zürich, Dudenverlag, Seite 1091

(73) Patentinhaber : **Heraeus Elektroden GmbH**
**Heraeusstrasse 12 - 14**
**D-6450 Hanau/Main (DE)**

(72) Erfinder : **Fabian, Peter**
**Theodor-Heuss-Strasse 4**
**D-6463 Freigericht 1 (DE)**
Erfinder : **Muller, Theo**
**Doelen 12**
**B-2170 Wuustwezel (BE)**

(74) Vertreter : **Zwergel, Wilhelm**
**Heraeusstrasse 12 - 14**
**D-6450 Hanau / Main (DE)**

**Beschreibung**

Die Erfindung betrifft eine Elektrode als Verbundkörper mit einem elektrisch leitenden Träger, auf dem eine Ventilmetall-verbindungen enthaltende Schicht, die im jeweiligen Elektrolyten inert, elekrisch leitend und elektrochemisch aktiv ist, durch ein thermisches Spritzverfahren aufgebracht ist.

Aus der DE-AS 16 71 422 ist eine Anode zur Alkalichloridelektrolyse bekannt, bei der auf einem Ventilmetallkern ein Gemisch von Ventilmetalloxiden und Verbindungen von Metallen der Platingruppe aufgebracht sind. Vorzugsweise werden ungefähr 70 Mol-% Titanoxid und 30 Mol-% Rutheniumoxid eingesetzt.

Weiterhin beschreibt die DE-AS 23 00 422 ein Verfahren zur Herstellung einer Elektrode für elektrolytische Prozesse, bei der auf ein Gerüst aus Ventilmetall, vorzugsweise aus Titan oder Titanlegierung, ein oxidisches Substrat aus Titanoxiden aufgebracht wird, wobei in dieses Substrat eine elektrochemisch aktive, Edelmetall enthaltende Schicht eingebracht wird ; das oxidische Substrat aus verschiedenen Titanoxiden in elektrisch leitender Form wird durch thermische Spritzverfahren an der Oberfläche des Ventilmetalls erzeugt. Dabei werden verschiedene unterstöchiometrische Titanoxide aufgebracht. Die auf das Titanoxid aufgetragene Schicht enthält Ruthenium und/oder Iridium.

Es ist eine Eigenheit des thermischen Spritzverfahrens - nämlich des Flammspritzens und des Plasmaspritzens -, daß die erzeugte Schicht eine mehr oder weniger große Porosität besitzt. Bei geringer Porosität findet die nach dem Spritzen vorgenommene elektrochemische Aktivierung nur an der Oberfläche der Schicht statt ; ist die Porosität der erzeugten Schicht jedoch größer, dringen die Aktivierungsteilchen von außen in Richtung auf den Träger tiefer ein, allerdings mit abnehmender Konzentration.

Als nachteilig erweist sich bei einer porösen Schicht, daß das Trägermaterial in dem Elektrolyseur oder der elektrochemischen Zelle gegen den Einfluß der Elektrolyseprodukte nicht ausreichend geschützt ist. Wenn jedoch andererseits die Spritzschicht in idealer Weise dicht wäre, ließe sich wegen der nachträglichen Aktivierung das aktive Material nur an der Außenoberfläche der Schicht anlagern, d. h. diese Teilchen könnten sehr schnell abgetragen werden und die Elektrode wäre elektrochemisch nicht mehr aktiv.

Die FR-A-2 120 796 beschreibt Elektroden, bei denen auf einen Graphitträger im Plasmastrahlverfahren pulverförmige Titancarbid- oder -nitridteilchen im Gemisch mit Platingruppenmetall- bzw. -oxidteilchen aufgebracht werden, wonach die Beschichtung durch Aufbringen weiterer metalloxidischer Verbindungen vor einem Abtrag geschützt wird.

Aufgabe der Erfindung ist es, eine Elektrode zu schaffen mit einer im thermischen Spritzverfahren aufgebrachten Schicht, die im jeweiligen Elektrolyten inert, elektrisch leitend und elektrochemisch durchgehend aktiv ist und aktive Metallteilchen möglichst fein und gleichmäßig verteilt an der Oberfläche aufweist.

Gelöst wird diese Aufgabe erfindungsgemäß dadurch, daß in dem Spritzverfahren ein Matrixmaterial in Pulverform eingesetzt wird, das aus Oxiden oder Karbiden eines Metalls aus der Gruppe der Ventilmetalle besteht, wobei an den Pulverteilchen des Matrixmaterials elektrochemisch aktive Teilchen eines Metalls aus der Platingruppe in einer um wenigstens eine Größenordnung geringeren Teilchengröße als die Größe der Pulverteilchen an der Oberfläche des Matrixpulvers gleichmäßig verteilt angelagert sind.

Da die beiden Komponenten für die Schicht miteinander in homogener Verteilung der kleinen aktiven Teilchen an den weit größeren Matrixteilchen oberflächlich verbunden sind, und das Verbundmaterial als spritzfähiges Pulver vorliegt, ergeben sich folgende Vorteile :

a) Die Schicht ist in einem Arbeitsgang herstellbar.

b) Das aktive Material ist in der Schicht sehr fein verteilt und bietet deshalb eine große aktive Oberfläche.

c) Mechanischer Abrieb führt nicht zu schneller Passivierung der Elektrode, da die Schicht durchgehend elektrochemisch aktiv ist. Selbst wenn Material an der Oberfläche abgetragen würde, käme wieder neues aktives Material zum Vorschein.

Diese und weitere Vorteile der Erfindung sind der nachfolgenden Beschreibung der Ausführungsbeispiele sowie der Zeichnung un den Ansprüchen zu entnehmen.

a) Beispiel für die Herstellung des Pulvers :

Das aktive Material wird in Form von löslichem Salz in einem leicht destillierbaren Lösungsmittel aufgelöst. In diese Lösung wird dann anschließend das Matrixmaterial gebracht und unter ständigem Rühren auf 50-10 °C unter dem Siedepunkt des Lösungsmittels erhitzt. Danach wird das Lösungsmittel abgedampft. Wenn das Pulver fast trocken ist, wird es in einem Trockeschrank weiter getrocknet bei einer Temperatur, welche ungefähr 10-40 °C höher liegt als die Siedetemperatur des Lösungsmittels.

Nach 1-4 Stunden wird das Pulver aus dem Ofen genommen und gemahlen, um die eventuell entstehenden Konglomerate wieder zu zerkleinern. Dabei ist zu beachten, daß die ursprüngliche Korngröße nicht zerstört wird. Nachher wird das Pulver dann in einen Tiegel gebracht und in einem

2

Muffelofen erhitzt, so daß das Salz nicht zersetzt und das aktive Material in reiner Form vorliegt. Das Aufheizen im Muffelofen kann auch unter Schutzgas oder in einem Formiergas stattfinden.

Das hier beschriebene Verfahren ist ein typisches Beispiel für einen Laborversuch.

Falls nun größere Mengen an aktiviertem Matrixmaterial erzeugt werden sollen, wird das Aufbringen auf dem Matrixmaterial ökonomischer durchgeführt, z. B. in einem Wirbelbett, wobei das Salz in einem Nebel im Gegenstrom auf das Wirbelbett gespritzt wird. Ziel dieses Verfahrens ist es, ein Material herzustellen, bei dem die Teilchen des Matrixmaterials so homogen wie möglich mit aktivem Material bedeckt werden. Mit homogen wird nicht notwendigerweise an eine dichte Schicht gedacht, sondern daß die Teilchen oder Körnchen des aktiven Materials regelmäßig verteilt auf der Oberfläche der Matrixmaterialteilchen liegen.

b) Beispiel für eine Beschichtung :

2,5 g Hexachloroplatinat werden in 120 ml Methanol gelöst. In einer Eindampfschale werden 100 g nichtstöchiometrisches Titanoxid mit Korngrößen Kleiner 100 $\mu$m — größer 37 $\mu$m abgewogen. Dann wird zu diesem Titanoxid die Lösung zugegeben und anschließend wird unter ständigem Rühren über einem Wasserbad das Methanol abgedampft. Wenn das Pulver fast trocken ist, wird in einem Trockenschrank weitergetrocknet bei einer Temperatur von 105 °C. Nach zwei Stunden wird das Pulver dann aus dem Ofen genommen und mit einem Mörser leicht zerkleinert, so daß das entstandene Konglomerat wieder auf ursprüngliche Korngröße gebracht wird. Jetzt wird das Pulver in einem Tiegel im Muffelofen auf 550 °C 4 Stunden lang erhitzt. Wenn das Pulver aus dem Ofen kommt und abgekühlt ist, wird es mit einem Mörser leicht gemahlen bis zur ursprünglichen Korngröße. Dann wird das Pulver gesiebt und mit Korngrößen Kleiner 100 $\mu$m — größer 37 $\mu$m als Spritzpulver zur Beschichtung benutzt.

Ein Titanblech mit Abmessungen 30 × 120 × 2 mm wird mit Normalkorund, welches 3 % Titanoxid enthält, gesandstrahlt und mittels eines Plasmabrenners, Typ F 4 von der Firma Plasmatechnik, mit dem aktivierten Pulver beschichtet. Die Bedingungen des Plasmaverfahrens sind :

| | |
|---|---|
| Stromstärke | 400 A |
| Spannung | 70 V |
| Plasmagas | $N_2$ 26 l/Minute |
| | $H_2$ 2 l/Minute |
| Spritzabstand | 150 mm |

Die erzeugte Schichtdicke betrug 100 Micrometer. Bevorzugter Bereich sind 80-110 $\mu$m, gut sind auch 50-150 $\mu$m.

Ist nun die aufgetragene Schicht zu stark, so wird dies unwirtschaftlich ; ist dagegen die Schichtstärke zu gering, so ist die Schicht nicht deckfähig, weist eine zu geringe Standzeit in der Zelle auf und ist mechanisch nicht genügend fest, insbesondere nicht genügend abriebfest.

In vorstehendem Beispiel wurde als Matrixmaterial ein Oxid von Titan gewählt.

Wegen ihrer elektrischen Leitfähigkeit und ihrer Beständigkeit in den jeweils verwendeten Elektrolyten sind im wesentlichen gleich gut geeignet auch Karbide eines Ventilmetalls, wobei diese besonders gut geeignet sind für Anoden in elektrochenischem Zellen, insbesondere mit Chlorid-Elektrolyten. Dabei wird Titanoxid bevorzugt, weil es ein handelsübliches Produkt mit breitem Anwendungsspektrum, z. B. in der Sintertechnik, ist.

Eine Elektrode nach den Ansprüchen 2 und 3 eignet sich besonders für Anoden in solchen Zellen mit Chlorid-Elektrolyten. Dabei wird angestrebt, die Menge der Platinmetallteilchen aus wirtschaftlichen Gründen möglichst gering zu halten, andererseits jedoch nicht so gering, daß hierdurch die erwünschten Eigenschaften beeinträchtigt werden.

Eine Elektrode nach Anspruch 5 ist besonders geeignet für Anwendungen, bei denen es darauf ankommt, daß diese auch im erheblichen Umfang mechanisch fest, insbesondere abriebfest sind, zumindest im Bereich der Oberfläche der Überzugsschicht.

Eine Elektrode nach Anspruch 6 wird bevorzugt angewendet in solchen Fällen, in denen es auf eine besonders sparsame Verwendung teuren Edelmetalls ankommt.

Ein Beispiel eines solchen Schichtaufbaus ist in der nachstehenden Tabelle aufgeführt.

| | Träger | |
|---|:---:|---|
| $TiO_2$ + Pt | | $TiO_2$ |
| 0 | | 100 |
| 20 | | 80 |
| 40 | | 60 |
| 60 | | 40 |
| 80 | | 20 |
| 100 | | 0 |
| | Außen-Oberfläche | |

Wie die Tabelle zeigt, beginnt die Schicht auf dem Träger mit 0 % Titanoxid plus Platinmetall, bezogen auf die Gesamtmasse der Schicht, und mit 100 % Titanoxid und endet an der Außenoberfläche mit der Schicht mit 100 % Titanoxid plus Platinmetall und 0 % Titanoxid.

Ein solcher Konzentrationsgradient ist leicht vorherbestimmbar mit Hilfe üblicher Dosiergeräte für z. B. zwei Komponenten unabhängig voneinander. Natürlich ist der Konzentrationsgradient auch in anderer gewünschter Weise als in der Tabelle aufgeführt herstellbar, insbesondere als kontinuierlicher Konzentrationsgradient.

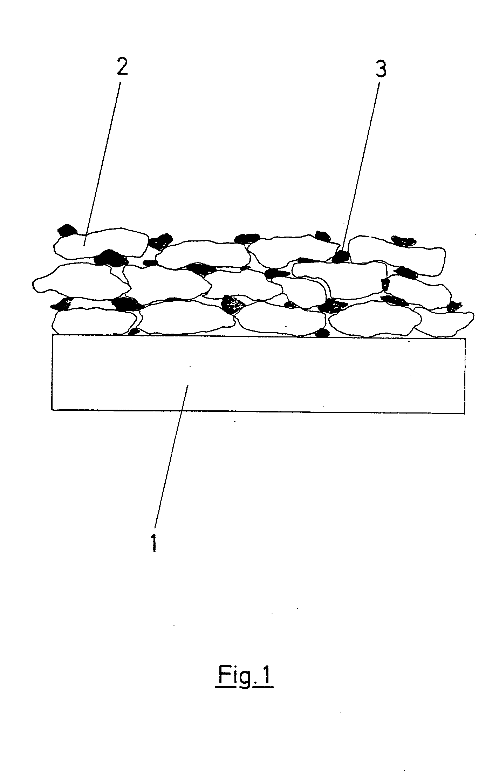

In der beigefügten Zeichnung (Figur 1) ist rein schematisch dargestellt ein Träger 1, auf dem als Überzug eine Spritzschicht durch ein thermisches Verfahren aufgebracht ist, mit Hilfe eines Verbundpulvers gemäß Anspruch 1.

Deutlich sichtbar in der Figur sind die Pulverteilchen des Matrixmaterials 2, an denen oberflächlich die um mindestens eine Größenordnung bevorzugt 20- bis 50-mal kleineren aktiven Teilchen 3 für den angestrebten Zweck möglichst homogen verteilt angelagert sind.

Erfindungsgemäß hergestellte Elektroden (Anode/Kathode) wurden in einer Laborversuchszelle unter folgenden Bedingungen getestet :

| | |
|---|---|
| Stromdichte | 100 A/m² |
| Elektrolyt | 10 % $H_2SO_4$ |
| Temperatur | 20 °C |
| Elektrodenspalt | 6,5 cm |

Versuchsergebnis :

Das Potential der Zelle war nach einem Monat Betriebsdauer unverändert bei 2,56 Volt.

**Patentansprüche**

1. Elektrode als Verbundkörper mit einem elektrisch leitenden Träger, auf dem eine Ventilmetallverbindungen enthaltende Schicht, die im jeweiligen Elektrolyten inert, elekrisch leitend und elektrochemisch aktiv ist, durch ein thermisches Spritzverfahren aufgebracht ist, dadurch gekennzeichnet, daß in dem Spritzverfahren ein Matrixmaterial in Pulverform eingesetzt wird, das aus Oxiden oder Karbiden eines Metalls aus der Gruppe der Ventilmetalle besteht, wobei an den Pulverteilchen des Matrixmaterials (2) elektrochemisch aktive Teilchen (3) eines Metalls aus der Platingruppe in einer um wenigstens eine Größenordnung geringeren Teilchengröße als die Größe der Pulverteilchen an der Oberfläche des Matrixpulvers gleichmäßig verteilt angelagert sind.

2. Elektrode nach Anspruch 1, dadurch gekennzeichnet, daß die Pulverteilchen aus Titanoxid oder Titancarbid bestehen, an denen Platinmetallteilchen in einer Menge von 1 bis 5 %, bezogen auf die Matrixmasse, angelagert sind.

3. Elektrode nach Anspruch 2, dadurch gekennzeichnet, daß die Pulverteilchen aus einem unterstöchiometrischen Titanoxid ($TiO_{2-x}$) bestehen und Platinmetallteilchen in einer Menge zwischen 1 und 3 %, bezogen auf die Matrixmasse, daran angelagert sind.

4. Elektrode nach Anspruch 3, dadurch gekennzeichnet, daß die Pulverteilchen etwa 20- bis 50-mal so groß sind, wie die mit ihnen oberflächlich verbundenen Platinmetallteilchen.

5. Elektrode nach einem oder mehreren der vorgehenden Ansprüche, dadurch gekennzeichnet, daß für das thermische Spritzverfahren ein ternäres System eingesetzt wird, welches Matrixmaterial (2), daran angelagerte Teilchen (3) und Hartstoffe in Form von keramischen, glasigen, glasartigen oder glaskeramischen Komponenten, in einer Menge von 5 bis 50 %, bezogen auf die Masse der Schicht, enthält.

6. Elektrode nach Anspruch 5, dadurch gekennzeichnet, daß die in der Matrix angelagerten Teilchen (3) in der Schicht nach einem vorbestimmten Gradienten derart verteilt sind, daß ihre Menge von innen nach außen zunimmt.

7. Verwendung einer Elektrode nach einem oder mehreren der vorhergehenden Ansprüche in elektrochemischen Zellen mit Chlorid- oder Schwefelsäure-Elektrolyten.

8. Verwendung einer Elektrode nach einem oder mehreren der vorhergehenden Ansprüche als Anode in elektrochemischen Zellen mit Chlorid- oder Schwefelsäure-Elektrolyten.

**Claims**

1. Electrode, as a composite element comprising an electrically conductive carrier on which a layer containing valve metal compounds which is inert, electrically conductive and electrochemically active in the electrolyte in question is applied by means of a thermal deposition process, characterised in that use is made in the deposition process of a matrix material in powder form which is formed by oxides or carbides of a metal of the valve metals group, electrochemically active particles (3) of a metal of the platinum group having a particle size which is smaller than the size of the powder particles by at least one

4

order of magnitude being deposited in uniform distribution on the surface of the matrix powder, on the powder particles of the matrix material (2).

2. Electrode according to claim 1, characterised in that the powder particles consist of titanium oxide or titanium carbide, on which platinum metal particles are deposited in a quantity of a 1 to 5 % based on the weight of the matrix.

3. Electrode according to claim 2, characterised in that the powder particles consist of a substoichiometric titanium oxide ($TiO_{2-x}$) and that platinum metal particles are deposited thereon in a quantity of between 1 and 3 % based on the matrix weight.

4. Electrode according to claim 3, characterised in that the powder particles are approximately 20 to 50 times as large as the platinum metal particles superficially joined to them.

5. Electrode according to one or more of the preceding claims, characterised in that a ternary system is utilised for the thermal deposition process, which contains matrix material (2), particles (3) deposited thereon and hard substances in the form of ceramic, vitreous, glass-like or vitreo-ceramic components in a quantity of 5 to 50 % based on the weight of the layer.

6. Electrode according to claim 5, characterised in that the particles (3) deposited on the matrix are distributed in the layer in accordance with a predetermined gradient in such manner that their quantity increases from the inside towards the outside.

7. Application of an electrode according to one or more of the preceding claims in electrochemical cells containing chloride or sulphuric acid electrolyte.

8. Application of an electrode according to one or more of the preceding claims as an anode in electrochemical cells containing chloride or sulphuric acid electrolyte.

## Revendications

1. Electrode sous forme d'un corps composite comportant un support électriquement conducteur sur lequel est déposée par un procédé de production thermique une couche qui dans l'électrolyte concernée, est inerte électriquement conductrice et électrochimiquement active, caractérisée en ce que l'on utilise dans le procédé de projection une matière de matrice sous forme de poudre qui consiste en oxydes ou carbures d'un métal du groupe des métaux de valves, en appliquant sur les particules de poudre de la matière de matrice (2) des particules (3) électrochimiquement actives d'un métal du groupe du platine d'une dimension de particules au moins dix fois plus petite que la dimension des particules de poudre, distribuées uniformément sur la surface de la poudre de matrice.

2. Electrode selon la revendication 1, caractérisée en ce que les particules de poudre consistent en oxyde de titane ou carbure de titane sur lesquelles sont déposées des particules de platine métallique en quantité de 1 à 5 % par rapport à la masse de la matrice.

3. Electrode selon la revendication 2, caractérisée en ce que les particules de poudre consistent en un oxyde de titane sous-stoechiométrique ($TiO_{2-x}$) et des particules de platine métallique sont déposées sur celles-ci en quantité comprise entre 1 et 3 % par rapport à la masse de la matrice.

4. Electrode selon la revendication 3, caractérisée en ce que les particules de poudre sont environ 20 à 50 fois plus grosses que les particules de platine métallique liées en surface avec elles.

5. Electrode selon une ou plusieurs des revendications précédentes, caractérisée en ce que l'on utilise pour le procédé de projection thermique un système ternaire, qui contient une matière de matrice (2), des particules (3) fixées sur celle-ci et des matériaux à résistance mécanique élevée sous forme de composants céramiques, vitreux, vitrifiés ou vitrocéramiques, en quantité de 5 à 50 %, par rapport à la masse de la couche.

6. Electrode selon la revendication 5, caractérisée en ce que les particules (3) fixées dans la matrice sont distribuées dans la couche selon un gradient préalablement déterminé de telle sorte que la quantité desdites particules augmente de l'intérieur vers l'extérieur.

7. Utilisation d'une électrode selon une ou plusieurs des revendications précédentes dans des cellules électrochimiques à électrolytes aux chlorures ou à l'acide sulfurique.

8. Utilisation d'une électrode selon une ou plusieurs des revendications précédentes comme anode dans des cellules électrochimiques à électrolytes aux chlorures ou à l'acide sulfurique.

<u>Fig.1</u>